# EUROPÄISCHE PATENTSCHRIFT

(11) **EP 0 561 803 B1**
(45) Veröffentlichungstag und Bekanntmachung des Hinweises auf die Patenterteilung: **10.08.1994**
(21) Anmeldenummer: 91919466.2
(22) Anmeldetag: 08.11.1991
(51) Int. Cl.: B62D 25/08, B62D 29/00

(54) **HECKABSCHLUSS EINER FAHRZEUGKAROSSERIE**
REAR END OF A VEHICLE BODY
DISPOSITIF DE FERMETURE ARRIERE D'UNE CARROSSERIE AUTOMOBILE

(30) Priorität: 20.12.1990 DE 4040978
(43) Veröffentlichungstag der Anmeldung: 29.09.1993
(73) Patentinhaber: AUDI AG, 85002 Ingolstadt (DE)
(72) Erfinder: ENNING, Norbert, D-8071 Denkendorf (DE); TIMM, Heinrich, D-8070 Ingolstadt (DE)
(74) Vertreter: Engelhardt, Harald
(86) Internationale Anmeldenummer: EP9102113
(87) Internationale Veröffentlichungsnummer: WO9211159

(56) Entgegenhaltungen:
- WO-A-90/02680
- FR-A- 2 268 680
- US-A- 1 809 606
- PATENT ABSTRACTS OF JAPAN, Band 135, Nr. 60 (M-109), 13. Dezember 1989
- PATENT ABSTRACTS OF JAPAN; Band 9, Nr. 103 (M-377)(1826), 8. Mai 1985
- PATENT ABSTRACTS OF JAPAN, Band 8, Nr. 124 (M-301)(1561), 9. Juni 1984

## Beschreibung

Die Erfindung betrifft einen Heckabschluß einer Fahrzeugkarosserie nach dem Oberbegriff des Anspruchs 1.

Bei Fahrzeugkarossen in Blechkonstruktion wird der Heckabschluß üblicherweise durch eine Mehrzahl von Heckabschlußblechen gebildet, die zu einer Tragstruktur und abschließenden Außenwand verschweißt sind. Dabei wird üblicherweise ein Querträger gebildet, der mit den im Heckbereich auslaufenden Längsträgerenden und dem Kofferraumboden verbunden ist.

Durch die größere Anzahl von Blechteilen und Schweißvorgängen ist eine solche Konstruktion relativ aufwendig. Bei einem Heckaufprall wird zudem meist die gesamte, zusammenhängende Anordnung verformt, so daß Reparaturen aufwendig und kostenintensiv sind.

Ein entsprechender Heckabschluß gemäß dem Oberbegriff des Anspruchs 1 umfaßt zwei Querträger, die als oberer Querträger und unterer Querträger übereinander angeordnet und verbunden sind. Die Querträger weisen einen konstanten Querschnitt auf. Der untere Querträger ist mit einem Kofferraumboden verbunden, liegt jedoch mit einem wesentlichen Teil seines Profils oberhalb der Ebene des Kofferraumbodens. Zudem sind am Fahrzeug zu beiden Seiten verlaufende Längsträger vorgesehen, die jedoch im Bereich vor den hinteren Radhäusern enden. Der Heckabschluß ist über eine Vielzahl von Bauteilen mit den Radhäusern, Seitenwänden, Federtöpfen, usw., verbunden, so daß bei einem häufig stattfindenden Heckaufprall aus einer hinteren, seitlichen Richtung die Aufprallenergie auf eine Vielzahl von Teilen, auch tragender Rahmenteile, wirkt. Damit führen auch bereits Fahrzeugkollisionen mit relativ geringer Aufprallenergie zu erheblichen Beschädigungen mit einem großen Reparaturaufwand durch Ausrichten und Ersetzen vieler Blechteile.

Besonders problematisch gestalten sich Reparaturen bei an sich bekannten Aluminium-Karosserien mit Karosserierahmen aus Strangpreßprofilen und Knotenelementen als Gußteilen (EP-PS 0 146 716). Solche Karosserien sind wegen der großen Korrosionsresistenz, verglichen mit üblichen Blechkarosserien, äußerst langlebig. Aufgrund der Unfallstatistikzahlen ist davon auszugehen, daß eine so langlebige Karosserie im Laufe ihrer Lebensdauer im Durchschnitt mehrfach Beschädigungen mit Verformungen, insbesondere im Heckbereich, erfährt. Reparaturen, insbesondere an tragenden Rahmenteilen, sind wegen der bekannten Schwierigkeiten, wie aufwendige Leichtmetall-Schweißungen, Festigkeitsverlust an Schweißstellen bei Mehrfach-Schweißungen, problematisch. Konstruktive Lösungen an gefährdeten Kollisionsstellen, die zumindest bei weniger starken Aufprallenergien zu keinen Beschädigungen tragender Rahmenteile führen, sind daher anzustreben.

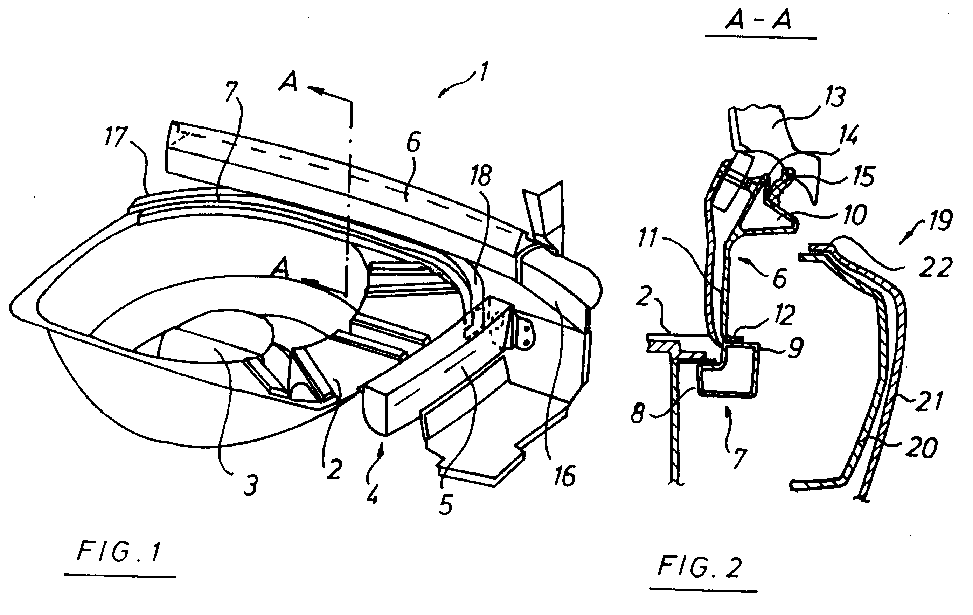

Es sind weiter Trägeranordnungen für Fahrzeugkarosserien bekannt (WO 90/02680 Al), bei denen aus Mehrkammerstrangprofilen durch Längsschlitzen an Kammertrennwänden Profilkammern teilweise voneinander getrennt und u.a. zu Querträgern abgebogen sind. Solche Querträgerabzweigungen, bei denen dann keine weiteren Verbindungstechniken, wie z.B. Schweißungen, erforderlich sind, sind im Bereich einer vorderen und hinteren Türsäule (Fig. 1) dargestellt. Durch die Abzweigung durch einen Abbiegevorgang sind die Querträger in diesem Bereich zwangsläufig gekrümmt. Ein Hinweis auf einen Querträgerverbund an einem Heckabschluß liegt nicht vor.

Weiter sind Nietverbindungen eines Querträgers mit zwei Längsträgern bekannt (US 1 809 606; Fig. 4), bei denen die Querträgerenden mit Krümmungen an den Längsträgern anliegen. Diese Verbindung wird im mittleren Fahrzeugbereich durchgeführt; im Heckbereich erfolgt die Verbindung über Zusatzteile dagegen rechtwinkelig und stumpf.

Aufgabe der Erfindung ist es, einen Heckabschluß einer Fahrzeugkarosserie nach dem Oberbegriff des Anspruchs 1 so weiterzubilden, daß bei einfachem Aufbau eine stabile Tragstruktur geschaffen wird, die bei einem Heckaufprall kostengünstiger zu reparieren ist.

Diese Aufgabe wird mit den kennzeichnenden Merkmalen des Anspruchs 1 gelöst.

Gemäß Anspruch 1 sind die Längsträger bis in den Heckbereich geführt und laufen dort mit Längsträgerenden aus. Weiter ist eine Heckklappe vorgesehen, wobei der obere Querträger der unteren Anlagekontur der Heckklappe folgt. Der untere Querträger liegt unterhalb der Ebene des Kofferraumbodens und folgt in einem mittleren Bereich dem Verlauf des oberen Querträgers. Die seitlichen Querträgerenden des unteren Querträgers sind unterhalb des Kofferraumbodens nach vorne gekrümmt und jeweils mit den Längsträgerenden verbunden. Der obere und untere Querträger liegen im mittleren Bereich, in dem beide in der gleichen Richtung verlaufen, aneinander und sind miteinander verbunden.

Durch diese Anordnung wird in einfacher Weise erreicht, daß oberhalb des Kofferraumbodens ein Querträger des Trägerverbunds längs der Außenkontur verläuft und damit die Anlagefläche und den Abschluß entlang der Heckklappe bildet. Gleichzeitig wird durch den unteren Querträger eine geeignete Anbindung mit guter Krafteinleitung über die Krümmung in die Längsträgerenden durchgeführt. Da die Krümmung unterhalb des Kofferraumbodens verläuft, wird durch diese Anordnung der gewünschte, ebene Verlauf des Kofferraumbodens nicht beeinträchtigt. Durch die Verbindung zwischen dem oberen und unteren Querträger wird ein stabiler Trägerverbund geschaffen.

Durch den an den Endseiten stark nach vorne gekrümmten Verlauf des unteren Querträgers, wird dieser bei einem Eckaufprall erst relativ spät getroffen und damit die Tragstruktur erst bei relativ schweren Kollisionen deformiert. Der obere Querträger wird bei geeigneter Anordnung des Stoßfängers bei einem Heckaufprall zuerst beschädigt, so daß im Reparaturfall nur der obere Querträger leicht ausgewechselt werden kann.

Besonders vorteilhaft ist nach Anspruch 2 die erfindungsgemäße Anordnung mit Aluminium-Strangprofilen ausführbar, wobei gegebenenfalls auch die Längsträger Aluminium-Strangprofile sind.

Für eine stabile Verbindung der beiden Querträger ist es nach Anspruch 3 zweckmäßig, diese miteinander zu verschweißen. Bei entsprechender Dimensionierung und genügend großer Anlagefläche kann auch eine Verklebung, gegebenenfalls mit einem Formschluß, vorgesehen sein. Je nach Konstruktion sind jedoch auch Schraubverbindungen möglich.

Bei modernen Fahrzeugen tragen die hinteren Längsträgerenden Pralltöpfe, in denen die Stoßfänger bzw. Stoßfängerträger mit Pralldämpfern gelagert sind. Ersichtlich stellt dieser Bereich einen Knotenpunkt der Tragstruktur dar, der stabil auszuführen ist. Mit Anspruch 4 wird daher vorgeschlagen, die Querträgerenden des unteren Querträgers mit diesen Knotenpunkten bzw. den hinteren Pralltöpfen für eine feste Struktur zu verbinden. Bevorzugt wird diese Verbindung durch Schweißen hergestellt.

Eine günstige, geometrische Anordnung wird erreicht, wenn der untere Querträger etwa in der Höhe des Stoßfängerträgers liegt, so daß damit auch die Längsträgerenden bzw. Pralltöpfe etwa in der Höhe des unteren Querträgers verlaufen. Dabei können die unteren Querträgerenden einfach von innen her seitlich an die Längsträgerenden herangeführt und verschweißt werden, so daß der Querträger gemäß Anspruch 5 zwischen den Längsträgerenden verläuft.

Nach Anspruch 6 ist es zweckmäßig, die Länge des oberen Querträgers etwa im Abstand der Längsträgerenden zu wählen. Die seitlichen, relativ starken Krümmungen der Außenkontur der Karosserie können dann einfacher mit entsprechend geformten Heckabschlußteilen ausgeführt werden.

In einer konkreten Ausführungsform nach Anspruch 7 wird für den unteren Querträger ein L-förmiges Hohlprofil vorgeschlagen. An einem unteren, waagrechten Schenkel kann dann einfach der Kofferraumboden aufliegen und verbunden werden. Am oberen, senkrecht stehenden Schenkel wird eine geeignete Anlagefläche für den oberen Querträger geschaffen. Durch die L-Struktur weist der untere Querträger eine hohe, geeignete Steifigkeit auf.

Als Profil für den oberen Querträger wird nach Anspruch 8 ein oberes Dreiecks-Hohlprofil vorgeschlagen, an das sich nach unten eine ebene Platte anschließt, die einen waagrechten Steg als Anlage am unteren Querträger aufweist.

Am oberen Dreiecks-Hohlprofil kann nach Anspruch 9, insbesondere bei einem Strangprofil, bereits der Dichtungsflansch mit eingesetzter Dichtung für die Heckklappe angeformt sein.

Das Dreiecks-Hohlprofil soll nach Anspruch 10 gegenüber der senkrechten Platte des Profils nach hinten vorstehen, so daß im Bereich der Platte für den Stoßfänger bzw. den oberen Stoßfängerrand ein Freiraum geschaffen ist. Die konkave Wölbung des Stoßfängers umgreift entsprechend mit einem Freiraum den unteren Querträger. Bei einem Heckaufprall mit geringer Energie kommt der Stoßfänger somit nicht mit dem Querträgerverbund in Berührung, so daß in dem Freiraum nur die an sich bekannten Pralldämpfer wirken und nach dem Aufprall den Stoßfänger wieder in seine Ausgangslage zurückstellen.

Anhand eines Ausführungsbeispiels wird die Erfindung mit weiteren Einzelheiten, Merkmalen und Vorteilen näher erläutert.

Es zeigen
- Fig. 1: eine perspektivische Ansicht eines Teils eines Heckabschlusses an einer Fahrzeugkarosserie und
- Fig. 2: einen Schnitt entlang der Linie A-A aus Fig. 1.

In Fig. 1 ist ein Teil eines Heckabschlusses 1 einer Fahrzeugkarosserie dargestellt mit einem Kofferraumboden 2, in den eine Reserveradmulde 3 eingelassen ist, mit einem seitlichen Längsträger 4, der in seinem Längsträgerende in einem Pralltopf 5 ausläuft und mit einem Trägerverbund aus einem oberen Querträger 6 und unteren Querträger 7.

Der obere und untere Querträger 6, 7 sind Aluminium-Strangprofile. Der untere Querträger 7 ist im Querschnitt als L-förmiges Hohlprofil gestaltet (sh. Schnitt nach Fig. 2), wobei an einem waagrechten Schenkel 8 der Kofferraumboden 2 aufliegt und an der Oberseite eines senkrechten Schenkels 9 die Anlagefläche für den oberen Querträger 6 gebildet ist.

Der obere Querträger 6 stellt im Querschnitt ein Profil dar mit einem oberen Dreiecks-Hohlprofil 10, an das sich nach unten eine ebene Platte 11 anschließt, die einen waagrechten Steg 12 trägt. Mit dem Steg 12 liegt der obere Querträger 6 am unteren Querträger 7 auf und ist dort mit diesem verschweißt (sh. Schnitt nach Fig. 2).

Beim Trägerverbund aus dem oberen und unteren Querträger 6, 7 folgt der obere Querträger mit einer leichten Krümmung der unteren Anlagekontur der Heckklappe 13. Im oberen Bereich des oberen Querträgers 6 am Dreieck-Hohlprofil 10 ist entsprechend ein Dichtungsflansch 14 angeformt und eine Dichtung 15 vorgesehen. Seitlich schließen sich an den oberen Querträger 6 Heckabschlußteile 16 an.

Der untere Querträger 7 liegt unterhalb der Ebene des Kofferraumbodens 2 und folgt in einem mittleren Bereich dem Verlauf des oberen Querträgers 6, wo er mit diesem auch fest verbunden ist. Die seitlichen Querträgerenden 17, 18 sind dagegen stark nach vorne gekrümmt, bis zu den Pralltöpfen 5 geführt und mit diesen dort zu stabilen Knotenpunkten verbunden.

Aus dem Schnitt nach Fig. 2 ist die Lage und Anordnung eines Stoßfängers 19, bestehend aus einem Stoßfängerträger 20 und einem Überzug 21 zu ersehen. Das Dreiecks-Hohlprofil 10 steht gegenüber der senkrechten Platte 11 des oberen Querträgers 6 nach hinten vor. Der obere Rand 22 des Stoßfängers 19 liegt hinter und unterhalb des Dreiecks-Hohlprofils 10, so daß in Richtung auf die Platte 11 ein Freiraum gebildet ist. Zudem umfaßt die konkave Auswölbung des Stoßfängers 19 in einem Abstand und Freiraum den unteren Querträger 7. Damit ist der erforderliche Freiraum für die Wirkung von Pralldämpfern geschaffen, über die der Stoßfänger 19 in den Pralltöpfen 5 gehalten ist.

Durch die Anordnung der Querträger 6, 7 zu einem Trägerverbund wird auf einfache Weise mit dem oberen Querträger 6 die Anlage für die Heckklappe geschaffen und durch den unteren Querträger 7 der Knotenpunkt im Bereich des Pralltopfs bei guter Krafteinleitung stabil ausgeführt. Bei einem Heckaufprall sind gegenüber bekannten Ausführungsformen sowohl die Schäden als auch der Reparaturaufwand geringer.

## Patentansprüche

1. Heckabschluß einer Fahrzeugkarosserie,
mit zwei Querträgern, die als oberer Querträger (6) und unterer Querträger (7) übereinander angeordnet und verbunden sind und die einen konstanten Querschnitt aufweisen,
mit einem Kofferraumboden (2), mit dem der untere Querträger (7) verbunden ist und
mit zu beiden Fahrzeugseiten verlaufenden Längsträgern (4),
dadurch gekennzeichnet,
daß die Längsträger (4) bis in den Heckbereich geführt sind und dort mit Längsträgerenden (Pralltöpfe 5) auslaufen,
daß eine Heckklappe (13) vorgesehen ist und der obere Querträger (6) der unteren Anlagekontur der Heckklappe (13) folgt,
daß der untere Querträger (7) unterhalb der Ebene des Kofferrambodens (2) liegt, in einem mittleren Bereich dem Verlauf des oberen Querträgers (6) folgt und die seitlichen Querträgerenden (17, 18) des unteren Querträgers (7) unterhalb des Kofferraumbodens (2) nach vorne gekrümmt und jeweils mit den Längsträgerenden (Pralltöpfe 5) verbunden sind und
daß der obere und untere Querträger (6, 7) im mittleren Bereich, in dem beide in der gleichen Richtung verlaufen, aneinander anliegen und untereinander verbunden sind.

2. Heckabschluß nach Anspruch 1, dadurch gekennzeichnet, daß die Querträger Aluminium-Strangprofile sind.

3. Heckabschluß nach Anspruch 1 oder 2, dadurch gekennzeichnet, daß die Verbindung zwischen den Querträgern (6, 7) durch Schweißen oder Kleben und/oder Formschluß hergestellt ist.

4. Heckabschluß nach einem der Ansprüche 1 bis 3, dadurch gekennzeichnet, daß die Längsträgerenden hintere Pralltöpfe (5) tragen und in diesem Bereich die unteren Querträgerenden (17, 18) verbunden sind.

5. Heckabschluß nach Anspruch 4, dadurch gekennzeichnet, daß der untere Querträger (7) zwischen den Längsträgerenden (Pralltöpfe 5) verläuft.

6. Heckabschluß nach einem der Ansprüche 1 bis 5, dadurch gekennzeichnet, daß der obere Querträger (6) in seiner Quererstreckung im Bereich des Abstandes der Längsträgerenden (Pralltöpfe 5) verläuft und mit seitlichen Heckabschlußteilen (14) verbunden ist.

7. Heckabschluß nach einem der Ansprüche 1 bis 6, dadurch gekennzeichnet, daß der untere Querträger (7) im Querschnitt ein L-förmiges Hohlprofil darstellt, wobei an einem waagrechten Schenkel (8) zumindest teilweise der Kofferraumboden (2) aufliegt und an einem nach oben weisenden Schenkel (9) der obere Querträger (6) mit seinem mittleren Bereich aufliegt und dort verbunden ist.

8. Heckabschluß nach einem der Ansprüche 1 bis 7, dadurch gekennzeichnet, daß der obere Querträger (6) im Querschnitt ein Profil mit einem oberen Dreiecks-Hohlprofil (10) und einer sich nach unten anschließenden, ebenen Platte (11), die einen waagrechten Steg (12) trägt, darstellt und
daß der obere Querträger (6) in seinem mittleren Bereich mit dem Steg (12) auf dem unteren Querträger (7) aufliegt und dort verbunden ist.

9. Heckabschluß nach Anspruch 8, dadurch gekennzeichnet, daß am Dreiecks-Hohlprofil (10) der Dichtungsflansch (14) mit eingesetzter Dichtung (15) für die Heckklappe (13) angebracht ist.

10. Heckabschluß nach Anspruch 8 oder 9, dadurch gekennzeichnet, daß das Dreiecks-Hohlprofil (10) gegenüber der senkrechten Platte (11) des Profils nach hinten vorsteht,
daß der obere Rand (22) eines Stoßfängers (19) nach hinten und unterhalb des Dreiecks-Hohlprofils (10) liegt und
daß die im Querschnitt konkave Form des Stoßfängers (19) den unteren Querträger (7) in einem Abstand übergreift.

## Claims

1. Tailgate closure on a vehicle body shell,
having two cross-members arranged one above the other and joined as an upper cross-member (6) and lower cross-member (7), and having a constant cross-section,
having a luggage compartment floor (2) to which the lower cross-member (7) is joined, and
having side-members (4) extending on both sides of the vehicle,
characterised in that
the side-members (4) run as far as the tailgate region, where they terminate in side-member extremities (impact absorbers 5),
a tailgate lid (13) is provided and the upper cross-member (6) conforms to the lower contact contour of the tailgate lid (13),
the lower cross-member (7) is located beneath the plane of the luggage compartment floor (2), conforms to the profile of the upper cross-member (8) in a central portion, and the lateral cross-member extremities (17, 18) of the lower cross-member (7) are curved forwards beneath the luggage compartment floor (2) and are joined to the respective side-member extremities (impact absorbers 5), and
the upper and lower cross-members (6, 7) bear against one another and are interconnected in the central portion in which both run in the same direction.

2. Tailgate closure according to claim 1, characterised in that the cross-members are extruded aluminium profiles.

3. Tailgate closure according to claim 1 or 2, characterised in that the joint between the cross-members (6, 7) is produced by welding or gluing and/or positive closure.

4. Tailgate closure according to any of claims 1 to 3, characterised in that the side-member extremities carry rear impact absorbers (5) and in this region the lower cross-member extremities (17, 18) are connected.

5. Tailgate closure according to claim 4, characterised in that the lower cross-member (7) extends between the side-member extremities (impact absorbers 5).

6. Tailgate closure according to any of claims 1 to 5, characterised in that in its transverse extension the upper cross-member (6) runs in the region of the gap between the side-member extremities (impact absorbers 5) and is joined to lateral tailgate closure components (14).

7. Tailgate closure according to any of claims 1 to 6, characterised in that the lower cross-member (7) constitutes an L-shaped hollow profile in cross-section, with at least part of the luggage compartment floor (2) resting on a horizontal leg (8) and the upper cross-member (8) resting with its central portion on an upward-pointing leg (9) and joined there.

8. Tailgate closure according to any of claims 1 to 7, characterised in that in cross-section the upper cross-member (6) constitutes a profile with an upper triangular hollow section (10) and a downwardly contiguous, plane plate (11) bearing a horizontal land (12), and
that the upper cross-member (6) rests in its central portion by the land (12) on the lower cross-member (7) and is joined there.

9. Tailgate closure according to claim 8, characterised in that the sealing flange (14) with the inserted seal (15) for the tailgate lid (13) is fitted on the triangular hollow section (10).

10. Tailgate closure according to claim 8 or 9, characterised in that the triangular hollow section (10) projects rearwards with respect to the vertical plate (11) of the profile,
that the upper edge (22) of a shock absorber (19) is situated to the rear and beneath the triangular hollow section (10), and
that the concave cross-sectional form of the shock absorber (19) overlaps the lower cross-member (7), leaving a gap.

## Revendications

1. Extrémité arrière d'une carrosserie de véhicule automobile, comprenant
deux traverses qui sont disposées l'une au-dessus de l'autre en tant que traverse supérieure (6) et traverse inférieure (7), sont jointes l'une à l'autre et présentent une section constante,
un plancher (2) de coffre à bagages, auquel est jointe la traverse inférieure (7), et
des longerons (4) qui s'étendent des deux côtés du véhicule,
caractérisée en ce que
les longerons (4) s'étendent jusque dans la région arrière et s'y terminent en bouts de longeron (pots anti-chocs 5),
il est prévu un hayon (13) et la traverse supérieure (6) suit le contour inférieur du hayon (13), qui s'appuie sur elle,
la traverse inférieure (7) est située en dessous du plan du plancher (2) du coffre à bagages et suit, dans sa partie moyenne, le tracé de la traverse supérieure (6), et les extrémités latérales (17, 18) de la traverse inférieure (7) sont recourbées vers l'avant au-dessous du plancher (2) du coffre à bagages et sont jointes chacune aux bouts des longerons (pots anti-chocs 5), et
les traverses supérieure et inférieure (6, 7) sont appliquées l'une contre l'autre et sont jointes l'une à l'autre dans leur région moyenne, où elles s'étendent toutes deux dans la même direction.

2. Extrémité arrière selon la revendication 1, caractérisée en ce que les traverses sont des profilés filés en aluminium.

3. Extrémité arrière selon la revendication 1 ou 2, caractérisée en ce que la jonction entre les traverses (6, 7) est réalisée par soudage ou collage et/ou par emboîtement.

4. Extrémité arrière selon l'une quelconque des revendications 1 à 3, caractérisée en ce que les bouts des longerons portent des pots anti-chocs arrière (5) et sont joints, dans cette région, aux extrémités (17, 18) de la traverse inférieure.

5. Extrémité arrière selon la revendication 4, caractérisée en ce que la traverse inférieure (7) s'étend entre les bouts des longerons (pots anti-chocs 5).

6. Extrémité arrière selon l'une quelconque des revendications 1 à 5, caractérisée en ce que la traverse supérieure (6) s'étend transversalement dans la région de l'intervalle entre les bouts des longerons (pots anti-chocs 5) et est jointe à des parties latérales (16) de l'extrémité arrière.

7. Extrémité arrière selon l'une quelconque des revendications 1 à 6, caractérisée en ce que la traverse inférieure (7) présente, en coupe transversale, un profil creux en forme de L, le plancher (2) du coffre à bagages reposant au moins partiellement sur une aile horizontale (8) de ce profil et la traverse supérieure (6) reposant par sa partie moyenne sur une aile (9) dirigée vers le haut et étant jointe à celle-ci.

8. Extrémité arrière selon l'une quelconque des revendications 1 à 7, caractérisée en ce que la traverse supérieure (6) présente, en coupe transversale, un profil comprenant un profil creux triangulaire supérieur (10) et une plaque plane (11) qui fait suite à celui-ci vers le bas et qui comporte un rebord horizontal (12), et
en ce que, dans sa partie moyenne, la traverse supérieure (6) repose par le rebord (12) sur la traverse inférieure (7) et est jointe à celle-ci.

9. Extrémité arrière selon la revendication 8, caractérisée en ce qu'un joint plat (14) avec garniture d'étanchéité rapportée (15) pour le hayon (13), est formé sur le profil creux triangulaire (10).

10. Extrémité arrière selon la revendication 8 ou 9, caractérisée en ce que le profil creux triangulaire (10) fait saillie vers l'arrière par rapport à la plaque verticale (11) du profilé,
en ce que le bord supérieur (22) d'un pare-chocs (19) est situé en arrière et au-dessous du profil creux triangulaire (10), et
en ce que la forme concave en coupe transversale du pare-chocs (19) recouvre à distance la traverse inférieure (7).
